Europäisches Patentamt

European Patent Office

Office européen des brevets

(11) Numéro de publication: **0 112 204**
**A1**

## (12) DEMANDE DE BREVET EUROPEEN

(21) Numéro de dépôt: 83402192.5

(22) Date de dépôt: 10.11.83

(51) Int. Cl.³: **G 01 T 1/202**

(30) Priorité: 17.11.82 FR 8219227

(43) Date de publication de la demande:
27.06.84 Bulletin 84/26

(84) Etats contractants désignés:
DE FR GB NL

(71) Demandeur: COMMISSARIAT A L'ENERGIE ATOMIQUE
Etablissement de Caractère Scientifique Technique et
Industriel
31/33, rue de la Fédération
F-75015 Paris(FR)

(72) Inventeur: Allemand, Robert
17, Chemin de Bouffière
F-38330 Saint Ismier(FR)

(72) Inventeur: Cuzin, Marc
"Les Cèdres" 24, rue Jean Jaurès
F-38610 Gieres(FR)

(72) Inventeur: Parot, Pierre
"Le Colombier"
F-04100 Manosque(FR)

(74) Mandataire: Mongrédien, André et al,
c/o BREVATOME 25, rue de Ponthieu
F-75008 Paris(FR)

(54) Dispositif d'acquisition d'images de rayonnement en temps réel.

(57) L'invention concerne un dispositif d'acquisition d'images de rayonnement en temps réel.

Ce dispositif comprend un écran radioluminescent (2) recevant une image de rayonnement d'un objet à irradier (4) exposé au rayonnement d'une source d'irradiation (S), un photodétecteur (8), recevant les signaux lumineux issus de l'écran radioluminescent, des moyens optiques (6) focalisant le rayonnement lumineux issu de l'écran radioluminescent (2) sur le photodétecteur (8) et des moyens de traitement (10). L'écran radioluminescent comprend une couche de $Gd_2O_2S$ dopé à l'europium.

Cette invention trouve notamment son application en imagerie médicale.

FIG. 1

EP 0 112 204 A1

La présente invention a pour objet un dispositif d'acquisition d'images de rayonnement en temps réel. Elle s'applique notamment à la détection d'images de rayonnement pour le contrôle non destructif ou pour l'imagerie médicale (radiologie ou tomographie).

Les dispositifs d'acquisition d'images de rayonnement en temps réel comprennent de façon connue une source d'irradiation S, un écran radioluminescent placé en regard de la source d'irradiation S, des moyens optiques focalisant le rayonnement lumineux issu de l'écran radioluminescent sur un photodétecteur, des moyens de mémorisation et de traitement situés en aval du détecteur.

La source d'irradiation S émet des rayons tels que des rayons X ou des rayons $\gamma$ de haute ou de très haute énergie. Ces rayonnements qui traversent l'objet à irradier sont absorbés par l'écran radioluminescent. Cet écran radioluminescent comprend un composé chimique qui absorbe les rayonnements issus de la source d'irradiation S et un dopant qui réémet l'énergie absorbée par l'écran radioluminescent sous forme de rayonnement lumineux capté par le photodétecteur. Cet écran peut être constitué d'un monocristal, par exemple de NaI dopé ou CsI dopé, ou d'une poudre de cristaux, par exemple de $Gd_2O_2S$ dopé, maintenus par un liant approprié. Cet écran radioluminescent est choisi de manière à ce qu'il émette un rayonnement lumineux adapté à la sensibilité du photodétecteur. Il est connu d'utiliser comme photodétecteur une caméra vidéo dont la sensibilité de type S-20 se situe dans le domaine visible proche de l'ultraviolet.

En imagerie médicale, l'objet à irradier est soit un être humain, soit un organe de cet être humain. Il est évident que le rayonnement issu de la source d'irradiation S ne doit pas être trop intense

B 7775.3 BL

pour ne pas nuire à la santé de l'objet à irradier. Compte tenu du rendement A d'absorption des rayonnements issus de la source d'irradiation S par l'écran radioluminescent, du rendement $\rho$ de conversion de ces rayonnements absorbés en rayonnements lumineux par l'écran radioluminescent et de l'angle solide de capture de l'émission lumineuse par le photodétecteur, le signal recueilli en fin de chaîne de mesure est trop faible pour être exploité.

Le rendement A qui mesure le rapport de l'énergie de rayonnement issu de la source d'irradiation S absorbé par l'écran radioluminescent à l'énergie de rayonnement de la source d'irradiation S incident à l'écran radioluminescent, est d'autant plus important que le composant absorbant de l'écran radioluminescent est de poids atomique plus élevé. Pour un composé tel que CsI, le rendement A est de l'ordre de 25 %, alors que pour un composé tel que $Gd_2O_2S$, il est de l'ordre de 50 %, à épaisseurs égales.

Le rendement $\rho$, dit rendement de radioluminescence, mesure le rapport de l'énergie émise sous forme de rayonnements lumineux par l'écran radioluminescent dans toutes les directions de l'espace à l'énergie absorbée sous forme de rayonnements issus de la source d'irradiation S. Ce rendement est de l'ordre de 14 % pour les meilleurs écrans connus.

Le rendement le plus intéressant pour apprécier le rendement de conversion de l'écran radioluminescent est le rendement $h$ qui mesure le rapport de l'énergie émise sous forme de rayonnements lumineux par la face de l'écran radioluminescent situé en regard du détecteur à l'énergie absorbée sous forme de rayonnements issus de la source d'irradiation S. Ce rendement $h$ est environ deux fois plus petit que le rendement de radioluminescence $\rho$, il est donc au plus de l'ordre de 7 %.

3 0112204

Le rendement global de l'écran radioluminescent Axη est donc au mieux de 50 % x 7 % = 3,5 %.
Ce rendement n'est pas suffisant pour obtenir un signal exploitable en fin de chaîne de mesure.

Pour améliorer le niveau de ce signal, il
est connu de réaliser une accumulation d'images dans
une mémoire électronique située à la sortie du détecteur. Une autre solution connue consiste à interposer
entre l'écran radioluminescent et le photodétecteur un
amplificateur de brillance.

La qualité de l'image de rayonnement obtenue
en fin de chaîne de mesure se ressent de la longueur
de cette chaîne de mesure. En effet, chaque élément de
la chaîne de mesure, comme tout système physique, introduit une distorsion de l'image de rayonnement et
affecte sa résolution et sa dynamique.

L'invention a précisément pour objet un dispositif d'acquisition d'images du rayonnement améliorant les dispositifs connus. Cette amélioration est
apportée par l'utilisation d'un écran radioluminescent émettant dans une bande spectrale adaptée à la
sensibilité du photodétecteur et offrant un rendement
de radioluminescence élevé.

De façon plus précise, le dispositif d'acquisition d'images de rayonnement en temps réel comprend de façon connue :
- un écran radioluminescent disposé en regard d'une
  source d'irradiation, l'objet à irradier étant placé
  entre cette source d'irradiation et l'écran radioluminescent,
- un photodétecteur avec un système mémorisateur de
  type analogique, recevant, soit directement, soit
  par l'intermédiaire d'un renvoi d'angle, les signaux
  lumineux issus de l'écran radioluminescent,
- des moyens optiques focalisant le rayonnement lumineux issu de l'écran radioluminescent sur le photodétecteur,

B 7775.3  BL

- des moyens de traitement,
l'écran radioluminescent comprenant une couche de $Gd_2O_2S$ dopé à l'europium.

Selon des caractéristiques secondaires du dispositif de l'invention, la teneur en europium est comprise entre 0,001 et 0,05 mole par mole de $Gd_2O_2S$ et la taille des cristaux de $Gd_2O_2S$ dopé à l'europium est comprise entre 5 et 20 µm.

Selon une autre caractéristique du dispositif de l'invention, les moyens de traitement contiennent un système d'accumulation d'images de type numérique pour compléter l'effet mémorisateur du photodétecteur.

Selon une autre caractéristique du dispositif de l'invention, le photodétecteur contient des moyens de conversion et d'amplification nécessaires quand le signal lumineux issu des moyens optiques est insuffisant.

Selon une autre caractéristique du dispositif de l'invention, la source S émet des rayonnements X ou γ de très haute énergie.

L'invention sera mieux comprise à la lecture de la description qui suit d'un exemple de réalisation donné à titre indicatif et non limitatif, en référence aux dessins annexés sur lesquels :
- la figure 1 est une représentation schématique du dispositif d'acquisition d'images de rayonnement selon l'invention,
- la figure 2 représente la courbe de réponse d'un photodétecteur au silicium,
- la figure 3 représente l'allure de la courbe d'émission lumineuse d'un écran radioluminescent $Gd_2O_2S$ dopé à l'europium.

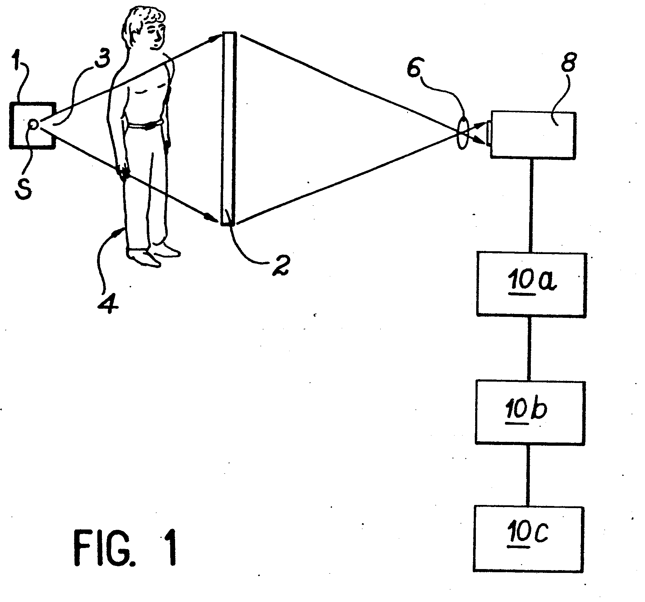

Sur la figure 1, on a représenté schématiquement un dispositif d'acquisition d'images de rayon-

B 7775.3  BL

nement selon l'invention. Ce dispositif comprend une source d'irradiation S placée dans une enceinte 1, arrêtant les radiations issues de la source S, dans laquelle est ménagée une fenêtre 3. Cette fenêtre 3 est telle que les rayonnements issus de la source d'irradiation S après avoir traversé l'objet à irradier 4, rencontrent l'écran radioluminescent 2.

Selon l'invention, cet écran radioluminescent 2 est constitué de cristaux de $Gd_2O_2S$ dopé à l'europium. La proportion de dopant est comprise entre 0,001 et 0,05 mole par mole de $Gd_2O_2S$. La taille des cristaux est comprise entre 5 et 20 µm. La taille des cristaux requis pour obtenir un rendement de radioluminescence $\rho$ optimum dépend de l'énergie de rayonnement issu de la source d'irradiation S. Ce rendement de radioluminescence $\rho$ atteint 20 % pour un rayonnement d'énergie de 60 keV, ce qui est supérieur au rendement des écrans radioluminescents connus.

De plus, le temps de réponse de cet écran radioluminescent 2, c'est-à-dire la durée qui s'écoule entre l'absorption d'énergie issue de la source d'irradiation S et la réémission de cette énergie sous forme de rayonnement lumineux, est de l'ordre de $1/2000^e$ seconde. Cet écran radioluminescent 2 permet donc de travailler en temps réel.

Le rayonnement lumineux issu de la face de l'écran radioluminescent 2 situé en regard du photodétecteur à système mémorisateur de type analogique 8 est focalisé sur ce photodétecteur 8 par un moyen 6 comprenant une lentille optique ou un ensemble de fibres optiques ou tout autre moyen connu de collection des photons. Le photodétecteur 8 est constitué d'une matrice de photodétecteurs à intégration de charges de type DTC qui mémorise l'image de rayonnement lumineux.

Un renvoi d'angle peut être prévu, avant ou après le moyen optique 6, pour que le photodétecteur puisse être disposé hors du champ de faisceau de la source S. Ceci est d'autant plus nécessaire que le rayonnement de la source S est énergétique.

Ce type de photodétecteur 8 à intégration de charges offre la possibilité de faire des radiographies avec des durées de pose variable. Cette souplesse d'utilisation n'était pas possible avec les caméras vidéo équipant les dispositifs d'acquisition d'images radiologiques connus. Ce photodétecteur 8 est par exemple constitué de 1024 rangs de 1024 photodé - tecteurs au silicium au pas d'un millième de pouce. La surface de photodétection est alors un carré d'environ 2,6 cm de côté. Les phododétecteurs étant correctement polarisés, des électrons photogénérés s'accumulent dans chaque photodétecteur en quantité proportionnelle à l'intégrale du flux lumineux reçu. Ces charges électriques piégées sont ensuite transférées dans un ou plusieurs registres à décalage.

Le signal électrique analogique délivré par le photodétecteur 8 est alors reçu par des moyens de traitement 10. Ces moyens de traitement 10 comprennent de façon connue un convertisseur analogique-numérique 10a, des moyens de traitement numérique 10b tels que des systèmes d'accumulation d'images de type numérique et des moyens de visualisation 10c.

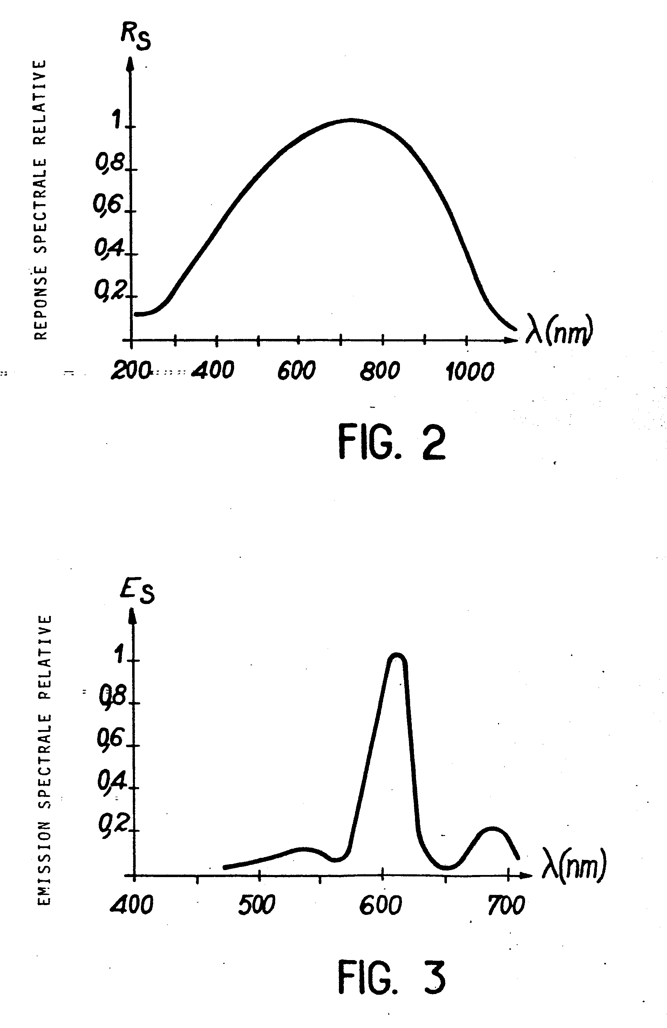

La figure 2 représente la courbe de réponse spectrale, ou de sensibilité, de photodétecteurs au silicium. Ce graphique porte en abscisse la longueur d'onde du rayonnement lumineux reçu par le photodétecteur et en ordonnée la réponse spectrale relative, comprise entre 0 et 1. La sensibilité d'un photodétecteur au silicium est maximale pour un rayonnement lumineux de 750 nm environ. Cette sensibilité reste importante entre 600 nm et 850 nm, c'est-à-dire dans le rouge et le proche infrarouge. Un écran radioluminescent émettant dans cette gamme de longueur d'onde est donc utilisé avantageusement avec un tel photodétecteur.

La figure 3 représente l'allure de la courbe d'émission de rayonnements par un écran radioluminescent $Gd_2O_2S$ dopé à l'europium. Ce graphique porte en abscisse la longueur d'onde du rayonnement émis par l'écran radioluminescent et en ordonnée l'émission spectrale relative comprise entre 0 et 1. Cet écran radioluminescent a une proportion de dopant de 0,01 à 0,001 et une taille de cristaux de 10 µm. Il est à remarquer que l'émission se fait pour la plus grande partie dans la gamme d'ondes 600 à 650 nanomètres. La gamme d'ondes de l'émission de rayonnements lumineux de l'écran radioluminescent est donc adaptée à la sensibilité des photodétecteurs au silicium.

B 7775.3 BL

REVENDICATIONS

1. Dispositif d'acquisition d'images de rayonnement en temps réel comprenant de façon connue :

- un écran radioluminescent (2) disposé en regard d'une source d'irradiation (S), l'objet à irradier (4) étant placé entre cette source d'irradiation (S) et l'écran radioluminescent (2),

- un photodétecteur avec un système mémorisateur de type analogique (8), recevant, soit directement, soit par l'intermédiaire d'un renvoi d'angle, les signaux lumineux issus de l'écran radioluminescent (2),

- des moyens optiques (6) focalisant le rayonnement lumineux issu de l'écran radioluminescent (2) sur le photodétecteur (8),

- des moyens de traitement (10), caractérisé en ce que l'écran radioluminescent (2) comprend une couche de $Gd_2O_2S$ dopé à l'europium.

2. Dispositif selon la revendication 1, caractérisé en ce que la couche de $Gd_2O_2S$ dopé à l'euro- pium contient une proportion d'europium comprise entre 0,001 et 0,05 mole par mole de $Gd_2O_2S$.

3. Dispositif selon l'une quelconque des revendications 1 ou 2, caractérisé en ce que la taille des cristaux de $Gd_2O_2S$ dopé à l'europium est comprise entre 5 et 20 µm.

4. Dispositif selon l'une quelconque des revendications 1 à 3, caractérisé en ce que les moyens de traitement (10) contiennent un système d'accumulation d'images de type numérique (10b) pour compléter l'effet mémorisateur du photodétecteur (8).

5. Dispositif selon l'une quelconque des revendications 1 à 4, caractérisé en ce que le photodétecteur (8) contient des moyens de conversion et d'amplification nécessaires quand le signal lumineux issu des moyens optiques (6) est insuffisant.

B 7775.3  BL

9 **0112204**

6. Dispositif selon l'une quelconque des revendications 1 à 5, caractérisé en ce que la source S émet des rayonnements X ou γ de très haute énergie.

FIG. 1

FIG. 2

FIG. 3

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-3 891 852  (BOLLEN et al.) <br> * Abrégé; colonne 2, lignes 59-65; colonne 3, lignes 12-38; colonne 4, lignes 37-65; colonne 20, lignes 16-45 * | 1,3 | G 01 T  1/202 |
| | --- | | |
| Y | FR-A-2 438 856  (FUJI PHOTO FILM CO. LTD.) <br> * Page 1, lignes 1-20; page 3, ligne 13 - page 4, ligne 5; page 5, ligne 15 - page 7, ligne 29; figures 1,2 * | 1,5,6 | |
| | --- | | |
| A | US-A-4 160 997  (SCHWARTZ) <br> * Abrégé; colonne 1, lignes 65 - colonne 2, ligne 41; colonne 2, ligne 51 - colonne 3, ligne 32; colonne 3, ligne 50 - colonne 4, ligne 27; figures 1,2 * | 1,4,6 | |
| | | | **DOMAINES TECHNIQUES RECHERCHES (Int. Cl. ³)** |
| | --- | | |
| A | US-A-4 320 296  (ISHIDA et al.) <br><br> * Abrégé; colonne 3, lignes 23-59; colonne 5, ligne 54; colonne 6, ligne 35; figures * | 1,4,5, 6 | G 01 T <br> H 05 G |
| | ----- | | |

Le présent rapport de recherche a été établi pour toutes les revendications

| Lieu de la recherche <br> LA HAYE | Date d'achèvement de la recherche <br> 15-03-1984 | Examinateur <br> DATTA S. |
|---|---|---|